Europäisches Patentamt

European Patent Office

Office européen des brevets

(19)

(11) Veröffentlichungsnummer : **0 099 502**
**B1**

(12) **EUROPÄISCHE PATENTSCHRIFT**

(45) Veröffentlichungstag der Patentschrift :
08.07.87

(21) Anmeldenummer : 83106482.9

(22) Anmeldetag : 02.07.83

(51) Int. Cl.⁴ : **B 01 J 3/04**// C04B40/00

(54) **Verfahren und Vorrichtung zur Dampfbehandlung mehrerer Autoklaven.**

(30) Priorität : 20.07.82 DE 3227097

(43) Veröffentlichungstag der Anmeldung :
01.02.84 Patentblatt 84/05

(45) Bekanntmachung des Hinweises auf die Patenterteilung : 08.07.87 Patentblatt 87/28

(84) Benannte Vertragsstaaten :
AT BE CH FR GB IT LI NL SE

(56) Entgegenhaltungen :
AT-B- 307 957
DE-A- 3 041 045
DE-B- 3 010 337

(73) Patentinhaber : **YTONG AG**
**Hornstrasse 3**
**D-8000 München 40 (DE)**

(72) Erfinder : **Specht, Manfred, Dipl.-Ing.**
**Ahornstrasse 14**
**D-8038 Gröbenzell (DE)**

(74) Vertreter : **Patentanwälte Dr. Solf & Zapf**
**Zeppelinstrasse 53**
**D-8000 München 80 (DE)**

EP 0 099 502 B1

**Beschreibung**

Zur Herstellung von hydrothermal gehärteten Baumaterialien wie z. B. Gasbeton, Schaumbeton, Kalk-Sand-Stein oder dergleichen werden Autoklavbatterien betrieben und nach dem Härteprozeß der Abdampf des einen Autoklaven zum Füllen eines anderen Autoklaven benutzt. Dieses Umfüllen gelingt bis zum Druckausgleich, d. h. bis im zu füllenden Autoklaven der gleiche Druck aufgebaut ist bis zu dem der Druck im zu entleerenden Autoklaven abgebaut ist. Der Rest des benötigten Dampfes wird als Frischdampf der Kesselanlage entnommen.

Zur Verbesserung der Abdampfausnutzung ist aus der DE-B 3 010 337 bekannt, den Frischdampf als Treibdampf durch eine Dampfstrahlpumpe zu leiten, deren Saugseite zumindest während eines Teils der Aufheizperiode mit dem abzukühlenden bzw. zu entleerenden Autoklaven verbunden ist. Dabei wird der Dampf zunächst vom abzukühlenden, in den aufzuheizenden bzw. zu füllenden Autoklaven bis zum Druckausgleich in beiden Autoklaven über eine direkte Leitung übergeleitet und dann der abzukühlende Autoklav mit der Saugseite der Dampfstrahlpumpe verbunden. Entsprechend dem im aufzuheizenden Autoklaven steigenden Gegendruck verliert die Dampfstrahlpumpe jedoch bereits bei ca. 2 atü Differenzdruck zwischen dem aufzufahrenden und dem abzufahrenden Autoklaven an Wirkung, so daß sich kein weiterer Abdampf aus dem abzukühlenden Autoklaven mehr entnehmen läßt. Der verbleibende Restdampf muß aus dem Dampfkreislauf ausgeschieden werden und kann nur noch entweder in einen Wärmetauscher zur Aufwärmung des Speisewassers der Kesselanlage oder in die Atmosphäre abgegeben werden.

Aufgabe der Erfindung ist, ein Verfahren zu schaffen, mit dem der Dampfkreislauf einer Autoklavanlage frischdampflos und vollständig, d. h. vollständiges Auffahren und Abfahren, betrieben werden kann ; ferner soll eine Vorrichtung zur Durchführung des Verfahrens aufgezeigt werden.

Die Aufgabe der Erfindung wird durch die Merkmale des Hauptanspruchs gelöst. Weitere erfindungswesentliche Merkmale sind Gegenstand der Unteransprüche. Anhand der Zeichnung wird die Erfindung beispielhaft näher erläutert. Es zeigen :

Figur 1 schematisch eine Anlage zum Betrieb zweier Autoklaven nach dem erfindungsgemäßen Verfahren,

Figur 2 schematisch eine andere Anlage zum Betrieb zweier Autoklaven nach dem erfindungsgemäßen Verfahren.

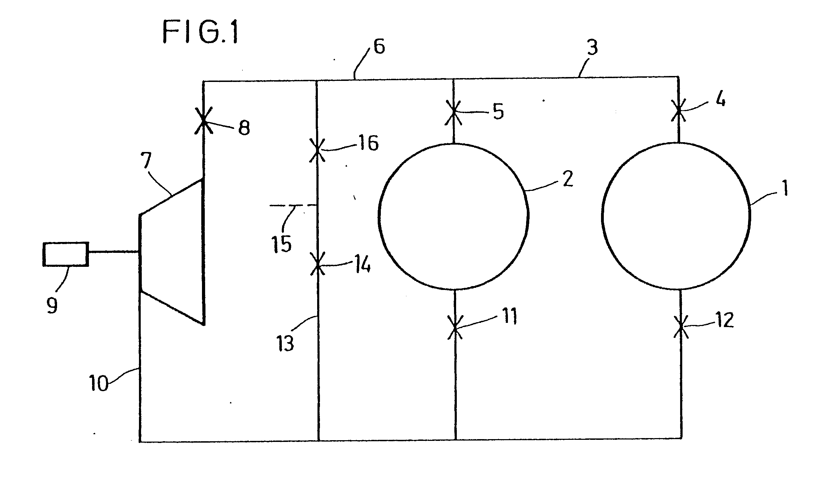

In Fig. 1 sind zwei Autoklaven 1 und 2 über eine Überströmleitung 3 miteinander verbunden. Ventile 4 und 5 ermöglichen ein Absperren der Zuleitungen zum jeweiligen Autoklaven 1 oder 2. Die Überströmleitung 3 steht mit einer Abpumpleitung 6 in Verbindung, die erfindungsgemäß zu einer mechanisch angetriebenen Hochtemperaturwärmepumpe 7 führt, wobei in der Leitung 6 vor der Wärmepumpe 7 ein weiteres Absperrventil 8 angeordnet ist. Die Hochtemperaturwärmepumpe 7 ist ein an sich bekannter Dampfkompressor, der mit geeigneten Mitteln, z. B. mit einem Elektromotor 9 oder einem Dampfentspannungsmotor oder dergleichen, antreibbar ist. Vom Dampfkompressor 7 führt eine Speiseleitung 10 zu den Autoklaven 2 und 1, wobei vor den Autoklaven ein Absperrventil 11, 12 in die jeweils von der Speiseleitung 10 abgezweigte Leitung eingebaut ist. Eine Leitung 13, in der Absperrventile 14 und 16 sitzen, kann die Abpumpleitung 6 mit der Speiseleitung 10 verbinden, und zwar zweckmäßigerweise zwischen dem Autoklaven 2 und dem Dampfkompressor 7. Die Leitung 13 ist zwischen den Ventilen 14 und 16 mit der Außenatmosphäre und/oder mit einer Kesselanlage verbunden, was mit der gestrichelten Leitung 15 angedeutet wird.

Der Dampfkompressor 7 hat die Aufgabe, Dampf niedrigen Drucks und unzureichender Temperatur in Dampf höheren Drucks und höherer Temperatur umzuwandeln. Der Dampfkompressor 7 kann ein- oder mehrstufig und mit Zwischenkühlung arbeiten.

Die in Fig. 1 skizzierte Härteanlage kann wie folgt betrieben werden. Über die Leitung 15 wird der Autoklav 2 mit Frischdampf einer Kesselanlage (nicht dargestellt) gefüllt, der die Leitungen 13 und 6 durchströmt, wenn die Ventile 14, 8, 4, 11 und 12 geschlossen und die Ventile 16 und 5 geöffnet sind. Nach Schließung der Ventile 16 und 5 erfolgt die Härteperiode für das hydrothermal zu härtende Baumaterial im Autoklaven 2. Ist die Härtung beendet, werden die Ventile 5 und 4 geöffnet, so daß Dampf aus dem Autoklaven 2 über die Überströmleitung 3 bis zum Druckausgleich in den Autoklaven 1 strömt. Anschließend werden Ventil 4 geschlossen, die Ventile 8 und 12 geöffnet und mit dem Dampfkompressor 7 über die Leitung 6 Dampf in den Kompressor gepumpt, der Dampf dort verdichtet, dadurch auf höhere Temperatur gebracht und der hochgespannte Dampf über die Speiseleitung 10 in den Autoklaven 1 gedrückt. Dieser Kreislauf ist beendet, wenn der Autoklav 2 vollkommen entleert und der Autoklav 1 vollkommen gefüllt ist. Frischdampf braucht nicht mehr zugesetzt zu werden. Ist der Autoklav 1 vollkommen gefüllt, wird das Ventil 12 abgesperrt und der Härtevorgang durchgeführt.

Der Dampfkreislauf kann beliebig wiederholt werden, d. h. nach dem Härten im Autoklaven 1 wird der Dampf in den Autoklaven 2 bei entsprechender Ventilstellung bis zum Druckausgleich abgelassen und mit dem Dampfkompressor 7 der Restdampf abgesaugt, verdichtet und in den Autoklaven 2 gedrückt. Soll die Autoklavanlage außer Betrieb gesetzt werden, kann der Dampf über die Leitung 15 ins Freie oder in einen Wärmetauscher (nicht dargestellt) überführt werden.

Die Verwendung einer frischdampflosen Wärmepumpe im Dampfkreislauf einer Autoklavbatterie für die Härtung von Baumaterialien, die mit einem Dampfbehandlungsplan betrieben wird, lag nicht ohne weiteres nahe, weil die Wärmepumpe eines gesonderten Antriebs bedarf und der Antrieb Energie benötigt. In überraschender Weise hat sich doch gezeigt, daß die Energie zum Betreiben der Wärmepumpe wesentlich kostengünstiger ist als die Energie zur Erzeugung von jeweils zusätzlichem Frischdampf, der bei den bekannten Verfahren bei jeder Umfüllung des Dampfes von einem zum anderen Autoklaven nach dem Druckausgleich zugesetzt werden muß.

Die Verwendung der Wärmepumpe ergibt aber nicht nur in vorteilhafter Weise die Möglichkeit, den Dampfkreislauf einer Autoklavbatterie teilweise oder vollkommen frischdampflos zu betreiben, sondern sie ermöglicht auch auf besonders einfache Weise, einen Autoklaven zu evakuieren. Das Evakuieren wird üblicherweise jeweils vor dem Einleiten von Dampf durchgeführt, um den Autoklaven zu entlüften. Die Entlüftung kann der Dampfkompressor 7 besorgen, der nach Art einer Pumpe arbeitet. Wenn z. B. der Autoklav 2 in Fig. 1 evakuiert werden soll, werden die Ventile 5, 8 und 14 geöffnet und die Luft mit dem Dampfkompressor 7 über die Leitung 6 aus dem Autoklaven 2 gesaugt und in die Leitungen 10, 13 und 15 gedrückt, von wo aus sie ins Freie gelangen kann. Diese Möglichkeit der Evakuierung erhöht die Wirtschaftlichkeit des Einsatzes der Wärmepumpe in besonderem Maße.

Eine weitere seit langem angestrebte Möglichkeit, die sich aus der Verwendung einer Wärmepumpe ergibt, ist, daß das bisherige Prinzip der Umfüllung des Dampfes geändert werden kann. Die Änderung des Prinzips, wonach zunächst hochgespannter Dampf bis zum Druckausgleich in den zu füllenden Autoklaven einströmt, dann ggf. niedriger gespannter Dampf in Kombination mit Frischdampf eingedrückt wird, gelingt durch die Kombination der Wärmepumpe mit mindestens einem an sich bekannten Dampfspeicher. Vorteilhaft ist die Kombination mit einem Hochdruck- und einem Niederdruckspeicher, um die mit der Wärmepumpe zu überwindende Druckdifferenz möglichst klein zu halten und somit eine möglichst hohe Leistungszahl der Wärmepumpe zu erreichen.

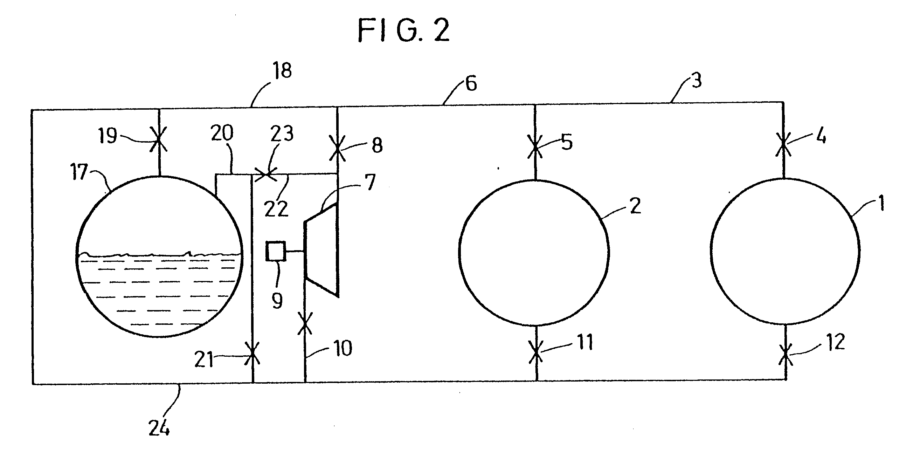

Prinzipiell zeigt Fig. 2 eine derartige Anlage mit einem Speicher 17, der z. B. ein Hochdruckspeicher sein kann. Im Vergleich zur Anlage nach Fig. 1 weist die Anlage nach Fig. 2 eine zum Speicher 17 führende Zuleitung 18 mit einem Ventil 19 sowie eine vom Speicher 17 abführende Leitung 20 mit einem Ventil 21 auf, wobei die Leitung 20 in die Leitung 10 einmündet. Von der Ableitung 20 zweigt eine Leitung 22 mit Ventil 23 zur Leitung 6 ab.

Mit dieser Härteanlage kann z. B. wie folgt gearbeitet werden. Vom abzulassenden Autoklaven 1 wird mit entsprechender Ventilstellung über die Leitungen 3, 6 und 18 hochgespannter Dampf in den Speicher 17 bis zum Druckausgleich geleitet. Dann wird über die Leitung 3 niedriger gespannter Dampf in den evakuierten Autoklaven 2 eingelassen, ebenfalls bis zum Druckausgleich. Anschließend wird der Autoklav 1 mit der Wärmepumpe 7 über die Leitungen 3 und 6 leergepumpt, der Dampf verdichtet und über die Leitung 10 in den Autoklaven 2 gepumpt. Danach kann über die Leitungen 20 und 10 aus dem Speicher 17 hochgespannter Dampf bis zum Druckausgleich entnommen werden. Der Rest des erforderlichen Dampfes wird schließlich über die Leitungen 20, 22 aus dem Speicher 17 gesaugt, in der Wärmepumpe 7 verdichtet und über die Leitung 10 in den Autoklaven 2 gedrückt. Wenn man bedenkt, daß die Dampfvolumina sich umgekehrt proportional zum Druck verhalten, kann man ermessen, welcher bedeutende Vorteil daraus resultiert, daß niedrig gespannter Dampf direkt vom zu entleeren in den aufzuheizenden Autoklaven geleitet werden kann.

Ebenso kann mit der Wärmepumpe 7 aus einem Autoklaven 1 oder 2 über die Leitungen 3, 6, 10 und 24 Dampf in den Speicher 17 gepumpt werden, wenn das Druckniveau im Speicher höher ist als im jeweiligen Autoklaven. Dies gelingt noch effektiver, wenn zwei oder mehr Speicher 17 hintereinander geschaltet werden, wobei der zweite Speicher als Niederdruckspeicher betrieben wird, der z. B. nach dem ersten Druckausgleich im ersten Speicher den niedriger gespannten Dampf aus dem zu entleerenden Autoklaven bis zum Druckausgleich aufnimmt und entsprechend in umgekehrter Reihenfolge an den zu füllenden Autoklaven abgibt.

Mit den aufgezeigten Mitteln kann der Dampfkreislauf einer Autoklavbatterie, bestehend aus mehreren Autoklaven, optimal durchgeführt werden, ohne daß Frischdampf zugesetzt werden muß. Der Zusatz von Frischdampf ist lediglich z. B. bei Dampfverlusten oder nach dem Ablassen der gesamten Anlage erforderlich. Das optimale Behandlungsschema kann selbstverständlich vom beispielsweise beschriebenen abweichen. Der Durchschnittsfachmann wird das jeweilige günstigste Betriebsschema ohne weiteres aufstellen können.

**Patentansprüche**

1. Verfahren zum Betreiben mehrerer Autoklaven einer Autoklavbatterie, in der Dampf im Kreislauf geführt wird, dadurch gekennzeichnet, daß zumindest ein Teil des im Kreislauf geführten Dampfes mit einer mechanisch angetriebenen Wärmepumpe, - z. B. Turboverdichter, Kolbenverdichter oder Schraubenverdichter ohne Frischdampfzufuhr, von einem relativ niedrigen Druck-Temperatur-Niveau auf ein höheres Druck-Temperatur-Niveau gebracht wird.

2. Verfahren nach Anspruch 1, dadurch gekennzeichnet, daß zumindest ein Teil des im Kreislauf geführten Dampfes zwischengespeichert wird.

3. Verfahren nach Anspruch 2, dadurch gekennzeichnet, daß der zwischengespeicherte Dampf mit der Wärmepumpe auf ein höheres Druck-Temperatur-Niveau gebracht wird.

4. Vorrichtung, zur Durchführung des Verfahrens nach Anspruch 1 bis 3, bestehend aus einer Autoklavbatterie, in der in Leitungen mit Absperrventilen Dampf im Kreislauf geführt wird, gekennzeichnet durch mindestens eine Wärmepumpe im Dampfkreislaufsystem.

5. Vorrichtung nach Anspruch 4, dadurch gekennzeichnet, daß die Wärmepumpe mehrstufig arbeitet und mit einer Zwischenkühlung ausgerüstet ist.

6. Vorrichtung nach Anspruch 4 und/oder 5, gekennzeichnet durch mindestens einen Zwischenspeicher im Dampfkreislaufsystem.

## Claims

1. Process for the working of several autoclaves in an autoclave battery, in which steam is passed in a circuit characterised in that at least part of the steam passed through the circuit is brought from a relatively lower pressure-temperature level to a higher pressure temperature level without fresh steam feed by means of a mechanically driven heat pump for example a turbo compressor, piston compressor or screw compressor.

2. Process according to Claim 1 characterised in that at least a part of the steam passed through the circuit is intermediately stored.

3. Process according to Claim 2 characterised in that the intermediately stored steam is brought to a higher pressure temperature level by means of the heat pump.

4. Apparatus for carrying out a process according to Claim 1-3, consisting of an autoclave battery, which connects steam in a circuit via a stop valve characterised by at least one heat pump in the steam circulating system.

5. Apparatus according to Claim 4, characterised in that the heat pump operates in multi stages and is provided with an intermediate cooling.

6. Apparatus according to Claim 4 and/or 5, characterised by at least one intermediate store in the steam circulating system.

## Revendications

1. Procédé pour exploiter plusieurs autoclaves montés en batterie, dans lequel de la vapeur est mise en circulation, caractérisé en ce qu'au moins une partie de la vapeur mise en circulation est amenée, d'un niveau de pression-température relativement bas à un niveau de pression-température plus élevé, sans apport de vapeur fraîche, au moyen d'une pompe à chaleur à entraînement mécanique, par exemple un turbocompresseur, un compresseur à piston ou un compresseur à vis.

2. Procédé selon la revendication 1, caractérisé en ce qu'au moins une partie de la vapeur mise en circulation passe dans un réservoir de retenue.

3. Procédé selon la revendication 2, caractérisé en ce que la vapeur du réservoir de retenue est amenée à un niveau de pression-température supérieur avec la pompe à chaleur.

4. Dispositif pour la mise en œuvre du procédé selon une des revendications 1 à 3, constitué d'une batterie d'autoclaves dans laquelle de la vapeur est mise en circulation dans des canalisations avec des soupapes d'arrêt, caractérisé en ce qu'il comporte au moins une pompe à chaleur dans le système de circulation de la vapeur.

5. Dispositif selon la revendication 4, caractérisé en ce que la pompe à chaleur travaille sur plusieurs étages et est munie d'un refroidissement intermédiaire.

6. Dispositif selon la revendication 4 et/ou 5, caractérisé en ce que le système de circulation de la vapeur comporte au moins un réservoir de retenue.

FIG.1

0 099 502

FIG. 2